(19) Europäisches Patentamt
European Patent Office
Office européen des brevets

(11) EP 4 810 565 A1

(12) EUROPEAN PATENT APPLICATION
published in accordance with Art. 153(4) EPC

(43) Date of publication:
**23.09.2026 Bulletin 2026/39**

(21) Application number: **24891295.8**

(22) Date of filing: **06.11.2024**

(51) International Patent Classification (IPC):
***C08L 27/12*** (2006.01) ***C08L 71/00*** (2006.01)
***C08L 101/04*** (2006.01) ***C09K 3/10*** (2006.01)

(52) Cooperative Patent Classification (CPC):
**C08L 15/02; C08L 27/12; C08L 71/00; C08L 101/04; C09K 3/10**

(86) International application number:
**PCT/JP2024/039413**

(87) International publication number:
**WO 2025/105257 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.11.2023 JP 2023194318**

(71) Applicant: **NICHIAS CORPORATION**
**Tokyo 104-8555 (JP)**

(72) Inventors:
- **SHIMIZU Tomoya**
**Tokyo 104-8555 (JP)**
- **TAKAHASHI Hikari**
**Tokyo 104-8555 (JP)**
- **KOJIMA Ko**
**Tokyo 104-8555 (JP)**

(74) Representative: **Heyerhoff Geiger GmbH & Co. KG**
**Heiligenbreite 52**
**88662 Überlingen (DE)**

# (54) RUBBER COMPOSITION, FLUORINE-CONTAINING ELASTOMER, AND SEALING MATERIAL

(57) An object is to provide a novel rubber composition for producing a seal material having predetermined plasma resistance and having predetermined hardness, a fluorine-containing elastomer made by crosslinking the rubber composition, and a seal material containing the fluorine-containing elastomer. The object can be achieved by a rubber composition containing compositions of: (a) a crosslinkable fluororubber; (b) a crosslinkable perfluororubber; (c) a fluorine oligomer with perfluoro backbone; and (d) a fluororesin.

Comparative Example 4
Example 1
A
B

FIG.2



Processed by Luminess, 75001 PARIS (FR)

## Description

[Technical Field]

The disclosure of the present application relates to a seal material used for a site requiring plasma resistance and relates to a rubber composition and a fluorine-containing elastomer for forming the seal material.

[Background Art]

In seal materials requiring plasma resistance, fluorine-containing elastomers are mainly used. The seal materials require plasma resistance and, on the other hand, also require to have required hardness. Patent Literature 1 discloses that it is possible to provide a seal material having predetermined hardness while maintaining plasma resistance by using (a) a crosslinkable fluororubber or (b) a crosslinkable perfluororubber as a rubber component, adding (c) a fluorine oligomer with perfluoro backbone thereto, and further combining a newly developed crosslinking agent therewith.

[Citation List]

[Patent Literature]

Patent Literature 1: International Publication No. 2021/230231

[Summary of Invention]

[Technical Problem]

However, the art disclosed in Patent Literature 1 is required to use an expensive crosslinking agent for the seal material to have predetermined hardness. In the actual manufacturing site, it is required to manufacture products while taking various factors such as costs of materials, availability of materials, or the like into consideration. Thus, there is a demand for development of a new rubber composition used for producing seal materials having predetermined plasma resistance and having predetermined hardness.

The disclosure of the present application has been made in order to solve the above problem. The present inventors have made intensive studies and thus newly found that the above problem can be solved by combined use of (a) a crosslinkable fluororubber, (b) a crosslinkable perfluororubber, (c) a fluorine oligomer with perfluoro backbone, and (d) a fluororesin.

That is, the goal of the disclosure of the present application is to provide a novel rubber composition, a fluorine-containing elastomer made by crosslinking the rubber composition, and a seal material containing the fluorine-containing elastomer for producing a seal material having predetermined plasma resistance and having predetermined hardness.

[Solution to Problem]

The disclosure of the present application relates to a rubber composition, a fluorine-containing elastomer, and a seal material illustrated as follows.

(1) A rubber composition comprising components of:

- (a) a crosslinkable fluororubber;
- (b) a crosslinkable perfluororubber;
- (c) a fluorine oligomer with perfluoro backbone; and
- (d) a fluororesin.

(2) The rubber composition according to (1) above, wherein the component (c) is contained at 0.1 phr or greater and 40 phr or less relative to 100 phr of the component (a) and the component (b) that are rubber components.

(3) The rubber composition according to (1) above, wherein a weight ratio of the component (d) / the component (c) is 0.1 or greater.

(4) The rubber composition according to (2) above, wherein a weight ratio of the component (d) / the component (c) is 0.1 or greater.

(5) The rubber composition according to (1) above, wherein a weight ratio of the component (d) / the component (b) is 0.1 or greater and 2 or less.

(6) The rubber composition according to (2) above, wherein a weight ratio of the component (d) / the component (b) is 0.1 or greater and 2 or less.
(7) The rubber composition according to (3) above, wherein a weight ratio of the component (d) / the component (b) is 0.1 or greater and 2 or less.
(8) The rubber composition according to (4) above, wherein a weight ratio of the component (d) / the component (b) is 0.1 or greater and 2 or less.
(9) A fluorine-containing elastomer made by crosslinking the rubber composition according to any one of (1) to (8) above.
(10) The fluorine-containing elastomer according to (9) above, wherein

the component (a) and the component (b) are immiscible with each other and have a phase-separated structure, the component (d) is dispersed in the component (b), and
the amount of the component (d) dispersed in the component (b) is greater than the amount of the component (d) not dispersed in the component (b).

(11) A seal material containing the fluorine-containing elastomer according to (9) above.
(12) The fluorine-containing elastomer according to (10), wherein a weight reduction rate after subjected to plasma exposure is 2% or less, the plasma exposure being performed by using a surface wave plasma etching device under conditions of a gas flow rate of $O_2$ (2000 sccm) + $CF_4$ (40 sscm), a treatment pressure of 133 Pa, output power of 3 kW, and an exposure time of 2 hours.

[Advantageous Effects of Invention]

With the use of the rubber composition disclosed in the present application, the fluorine-containing elastomer and the seal material containing the fluorine-containing elastomer having predetermined plasma resistance and having predetermined hardness are obtained.

[Brief Description of Drawings]

[FIG. 1]

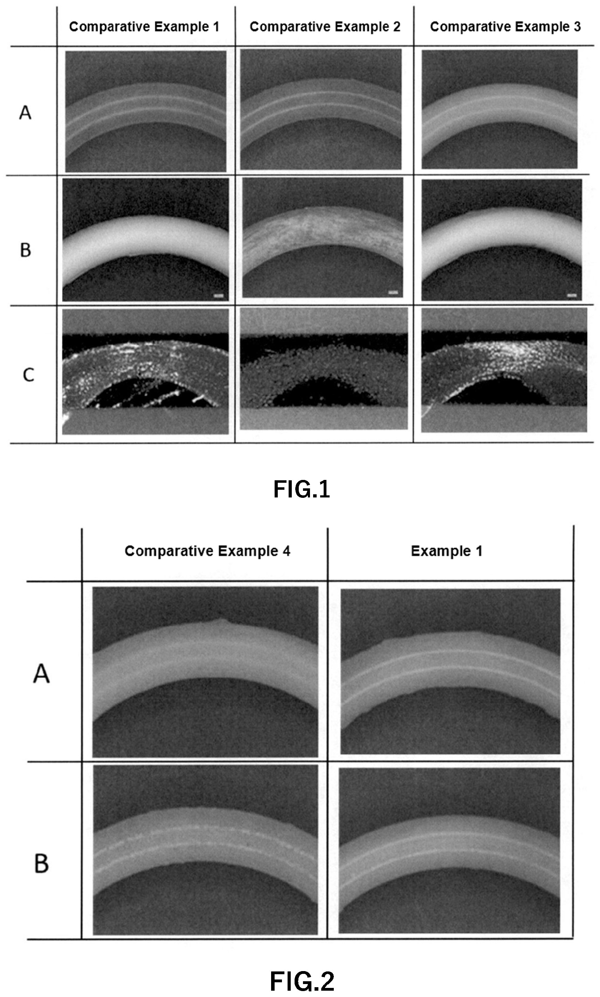

FIG. 1 represents photographs substituted for a drawing, which are photographs of a molded body (O-ring) fabricated in Comparative examples 1 to 3. The lane A includes photographs taken before plasma irradiation, the lane B includes photographs taken after two hours of plasma irradiation, and the lane C includes photographs of the transferred molded body taken after two hours of plasma irradiation.
[FIG. 2]
FIG. 2 represents photographs substituted for a drawing, which are photographs of a molded body (O-ring) of Comparative example 4 and Example 1. The lane A includes photographs taken before plasma irradiation, and the lane B includes photographs taken after five hours of plasma irradiation.
[FIG. 3]

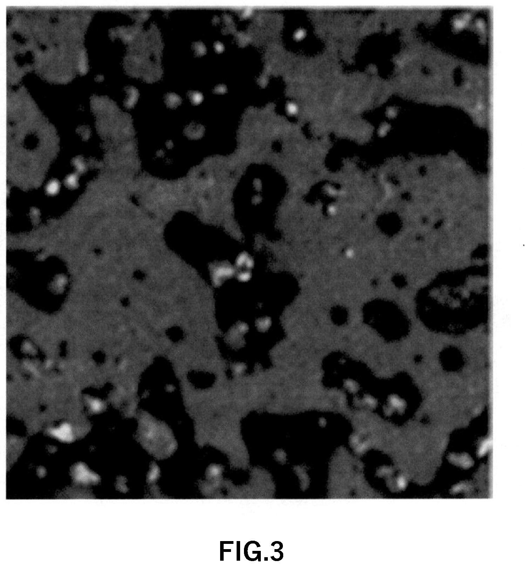

FIG. 3 is a photograph substituted for a drawing, which is an image of a cross section of the molded body of Example 4 mapped for elastic modulus by using a scanning probe microscope (SPM).

[Description of Embodiments]

A rubber composition, a fluorine-containing elastomer, and a seal material disclosed in the present application will be described below in detail.
Note that, in the present specification, numerical ranges expressed by using "to" mean a range including numerical values stated before and after "to" as the lower limit value and the upper limit value, respectively. Further, in the present specification, it is construed that numerical values, numerical ranges, and qualitative expressions (for example, expressions such as "identical", "same", or the like) represent the numerical values, numerical ranges, and properties including errors generally accepted in this technical field.

[Embodiment of rubber composition]

The rubber composition according to the embodiment contains components of: (a) a crosslinkable fluororubber, (b) a crosslinkable perfluororubber, (c) a fluorine oligomer with perfluoro backbone, and (d) a fluororesin.

<Component (a) and component (b)>

First, the crosslinkable fluororubber that is the component (a) (hereafter, which may be referred to as "FKM") and the crosslinkable perfluororubber that is the component (b) (hereafter, which may be referred to as "FFKM") will be described. Note that, when collectively described, the FKM and FFKM may be simply referred to as "fluorine-containing crosslinkable rubber".

The term "crosslinkable" means a fluorine-containing rubber that can be crosslinked by a crosslinking reaction. For example, the fluorine-containing crosslinkable rubber can include a repeating unit derived from a fluorine-containing monomer. The fluorine-containing crosslinkable rubber can include a repeating unit derived from one type or two or more types of fluorine-containing monomers.

The fluorine-containing monomer may be, for example, tetrafluoroethylene (TFE) expressed by Formula (a-1) below, hexafluoropropylene (HFP) expressed by Formula (a-2) below, or the like.

$CF_2{=}CF_2$ (a-1)

$CF_2{=}CFCF_3$ (a-2)

Further, the fluorine-containing monomer may be, for example, perfluoroolefin having a single unsaturated bond of an ethylene-type preferably at a terminal position and others. The specific example may be perfluoroalkyl vinyl ether (PAVE) expressed by Formula (a-3) below, perfluorooxyalkyl vinyl ether expressed by Formula (a-4) below, perfluorovinyl ether expressed by Formula (a-5) below, or the like.

$CF_2{=}CFOR^{f1}$ (a-3)

(In Formula (a-3), $R^{f1}$ is perfluoroalkyl having 1 to 6 carbon atoms, for example, trifluoromethyl or pentafluoropropyl.)

$CF_2{=}CFOR^{f2}$ (a-4)

(In Formula (a-4), $R^{f2}$ is perfluorooxyalkyl having 1 to 12 carbon atoms containing one or more ether groups, for example, perfluoro-2-propoxypropyl.)

$CF_2{=}CFOCF_2OR^{f3}$ (a-5)

(In Formula (a-5), $R^{f3}$ is straight-chain or branched perfluoroalkyl having 2 to 6 carbon atoms, cyclic perfluoroalkyl having 5 or 6 carbon atoms, or straight-chain or branched perfluorooxyalkyl having 2 to 6 carbon atoms containing 1 to 3 oxygen atoms.)

In one embodiment, the perfluorovinyl ether expressed by Formula (a-5) is expressed by Formula (a-6) or Formula (a-7) below. Note that the perfluorovinyl ether expressed by Formula (a-6) may be referred to as "MOVE 1", and the perfluorovinyl ether expressed by Formula (a-7) may be referred to as "MOVE 2".

$CF_2{=}CFOCF_2OCF_2CF_3$ (a-6)

$CF_2{=}CFOCF_2OCF_2CF_2OCF_3$ (a-7)

In one embodiment, the fluorine-containing crosslinkable rubber may be a copolymer including a repeating unit derived from one or more types of fluorine-containing monomers selected from a group consisting of Formula (a-1) and Formula (a-2) and a repeating unit derived from one or more types of fluorine-containing monomers (comonomers) selected from a group consisting of Formula (a-3) to Formula (a-5).

The composition (molar ratio) of the fluorine-containing monomer used for producing the fluorine-containing crosslinkable rubber is not particularly limited.

In one embodiment, the fluorine-containing crosslinkable rubber is produced by using 50 to 85% by mole of one or more types of fluorine-containing monomers selected from a group consisting of Formula (a-1) and Formula (a-2) and 15 to 50% by mole of one or more types of fluorine-containing monomers selected from a group consisting of Formula (a-3) to Formula (a-5).

In one embodiment, the fluorine-containing crosslinkable rubber is produced by using 50 to 85% by mole of TFE and 15 to 50% by mole of PAVE.

In one embodiment, the fluorine-containing crosslinkable rubber is produced by using 50 to 85% by mole of TFE and 15 to 50% by mole of MOVE. Herein, "MOVE" is of one or more types selected from a group consisting of MOVE 1 and

MOVE 2.

In one embodiment, the fluorine-containing crosslinkable rubber includes or does not include a unit derived from vinylidene fluoride.

In the present specification, the FKM means rubbers containing hydrogen in the chemical structure among the fluorine-containing crosslinkable rubbers described above. The FKM may be, for example, a fluororubber (FKM), such as vinylidene fluoride / hexafluoropropylene copolymer (bi-polymer FKM), vinylidene fluoride / hexafluoropropylene / tetrafluoroethylene copolymer (terpolymer FKM), vinylidene fluoride / hexafluoropropylene / perfluoroalkyl vinyl ether copolymer, tetrafluoroethylene / propylene copolymer, hexafluoropropylene / ethylene copolymer, tetrafluoroethylene / ethylene / perfluoroalkyl vinyl ether copolymer, vinylidene fluoride / 2,3,3,3-tetrafluoropropylene, or the like, but not limited thereto.

In the present specification, the FFKM means rubbers not containing hydrogen in the chemical structure among the fluorine-containing crosslinkable rubbers described above. The FFKM may be, for example, a perfluororubber, such as tetrafluoroethylene/perfluoroalkyl vinyl ether copolymers (FFKM), or the like, but not limited thereto.

While being inexpensive and having a certain degree of plasma resistance and thermal resistance, the FKM needs to be mixed with the FFKM for use when higher plasma resistance is required. The rubber composition according to the embodiment contains the FKM and the FFKM as essential components. Note that the FKM and the FFKM are immiscible with each other. Therefore, the FKM and the FFKM take a phase-separated structure such as a sea-island structure, a co-continuous structure, or the like in accordance with the blending ratio thereof.

As described above, the FKM contains hydrogen in the chemical structure. On the other hand, the FFKM does not contain hydrogen in the chemical structure and contain more fluorine than the FKM. Therefore, the FFKM has excellent plasma resistance compared to the FKM. Further, the FKM and the FFKM are immiscible due to differences in properties based on the difference in the chemical structure and take the phase-separated structure as described above. While a higher FFKM ratio in the rubber components (the FKM and FFKM) contained in the fluorine-containing elastomer improves the plasma resistance and also improves the thermal resistance, such a higher FFKM ratio increases costs because the FFKM is more expensive than the FKM. The ratio between the FKM and the FFKM occupying the fluorine-containing crosslinkable rubber can be set as appropriate taking properties, costs, or the like required for the fluorine-containing elastomer into consideration. The ratio of the FKM to 100 phr of the fluorine-containing crosslinkable rubber may be, but not limited to, for example, 0.1 to 99.9. The ratio of the FKM to 100 phr of the fluorine-containing crosslinkable rubber may be 50.1 to 99.9 in a cost perspective rather than a technical perspective. Note that, although description of a specific numerical range is omitted, any single-digit decimal number included in the range of 0.1 to 99.9 may be selected, and a range may be determined as a to b.

Note that, in the fluorine-containing elastomer disclosed in the present application, the FFKM also functions as a phase used for dispersing a fluororesin that is a filling material for increasing the hardness.

In one embodiment, the fluorine-containing crosslinkable rubber may or may not contain a unit derived from fluoroolefin having 3 to 8 carbon atoms containing iodine and/or bromine. When containing the unit described above, the fluorine-containing crosslinkable rubber contains preferably iodine and/or bromine, more preferably iodine as an attack site of radicals in crosslinking (curing). The fluorine-containing crosslinkable rubber that can be cured by peroxides is disclosed in, for example, Japanese Patent Application Laid-Open No. 2006-9010 and the like. When including the unit described above, in general, the fluorine-containing crosslinkable rubber contains iodine at 0.001% by mass to 5% by mass, preferably 0.01% by mass to 2.5% by mass relative to the whole polymer mass. Iodine atoms may be present along a chain and/or at a terminal position of the fluorine-containing crosslinkable rubber.

<Component (c)>

Next, the fluorine oligomer with perfluoro backbone that is the component (c) (hereafter, which may be referred to as "PFPE") will be described. While having a function of improving the plasma resistance of the fluorine-containing elastomer, the PFPE has a function of reducing the hardness thereof. The PFPE is an oligomer made of elements of C, F, and O (in which all the hydrogen elements of a hydrocarbon are substituted with fluorine elements) and may be, for example, fluorine oligomers (c-1) to (c-8) containing basic backbones as follows.

[Formula 1]

$$F\left[CF(CF_3)-CF_2-O\right]_n-CF_2-CF_3$$

(c－1)

$$CF_3-\left[\left(OCF(CF_3)CF_2\right)_n-\left(O-CF_2\right)_m\right]-O-CF_3 \quad n>m$$

(c－2)

$$F\left[CF_2-CF_2-O\right]_n-CF_2-CF_3$$

(c－3)

$$A\left[CF_2-CFCl\right]_n-A \quad A = F \text{ or } Cl$$

(c－4)

[Formula 2]

$$F_3C-\left[\left(O-CF_2-CF_2\right)_n\left(O-CF_2\right)_m\right]-O-CF_3 \quad n>m \qquad (c-5)$$

$$F-\left[CF_2-\underset{\underset{O}{\|}}{C}\right]_n-CF_2-CF_3 \qquad (c-6)$$

$$F-\left[FC\overset{O}{-}CF-CF_2\right]_n-CF_2-CF_3 \qquad (c-7)$$

$$F-\left[\underset{O-\left[CF_2\right]_m-CF_3}{\underset{|}{CF}}-CF_2\right]_n-CF_2-CF_3 \quad n>m>\geq 0 \qquad (c-8)$$

The PFPEs expressed by Formulae (c-1) to (c-8) above differ in molecular weight by the numbers n and m, and in general, a larger molecular weight provides a higher viscosity and a higher boiling point. For the PFPEs containing the basic backbones described above, a synthesized PFPE may be used, or a commercially available PFPE sold as a fluorine-based solvent (oil, grease) may be used. As the commercially available PFPE, products of various grades having different properties such as a viscosity in accordance with the numbers n and m are known. The commercially available PFPE may be, for example, Krytox (registered trademark) series by DuPont; Fomblin (registered trademark) series and Galden (registered trademark) series by Solvay; Demnam series by Daikin, or the like. Note that the products and the backbones described above are mere examples, and other backbones or products may be used unless they contain hydrogen. Further, as indicated above in Formulae (c-1) to (c-8) above, the PFPE includes an ether bond in the basic backbone, and these PFPEs are not bonded (crosslinked) to each other during crosslinking (curing) of the rubber composition. A single type of PFPE described above can be used alone, or two or more types of PFPEs described above can be used in combination.

In the rubber composition according to the embodiment, a non-reactive PFPE is used as the component (c). Alternatively, a reactive group may be bonded to the perfluoro backbone to form a reactive compound.

Being a "reactive" compound means that reactive compounds may be reacted with each other during cross-linking (curing) of the rubber composition. Such a reaction may cause the reactive compounds to bond to each other. Further, the reactive compound may also react with the components (a) and (b). This reaction may cause the reactive compound to bond to the components (a) and (b). It is preferable for the reactive compound to contain an alkenyl group as a group (reactive group) that provides such reactivity.

The alkenyl group may be, for example, a vinyl group, an allyl group, a butenyl group, a pentenyl group, a hexenyl group, a heptenyl group, or the like. The alkenyl group is preferably a vinyl group among the above.

It is preferable for the reactive compound to have two or more alkenyl groups in the molecule thereof. The two or more alkenyl groups may be the same or may differ from each other.

In one embodiment, the reactive compound is a compound with perfluoro backbone having an alkenyl group. The compound with perfluoro backbone having an alkenyl group in the molecule may have, for example, a divalent

perfluoropolyether structure or a divalent perfluoroalkylene structure.

In one embodiment, the reactive compound has a divalent perfluoropolyether structure or a divalent perfluoroalkylene structure and has two or more alkenyl groups at terminals or side chains. For such reactive compounds, for example, those similar to the fluorine-based elastomer disclosed in paragraphs [0016] to [0022] of Japanese Patent Application Laid-Open No. 2003-183402, the perfluoro compound disclosed in paragraphs [0006] to [0014] of Japanese Patent Application Laid-Open No. H11-116684 or Japanese Patent Application Laid-Open No. H11-116685, or the like can be used.

In one embodiment, the reactive compound is expressed by Formula (c-9) below.

$$CH_2=CH-(X)_p-(R^f-Q)_a-R^f-(X)_p-CH=CH_2 \qquad (c\text{-}9)$$

In Formula (c-9), the two of X are independently $-CH_2-$, $-CH_2O-$, $CH_2OCH_2-$, $-Y-NR^1SO_2-$, or $-Y-NR^1-CO-$ (note that Y is $-CH_2-$ or $-Si(CH_3)_2-Ph-$ (Ph: phenylene group)), respectively.

$R^1$ is a hydrogen atom or a substituted or unsubstituted monovalent hydrocarbon group.

$R^f$ is a divalent perfluoroalkylene group or a divalent perfluoropolyether group.

The two of p are independently 0 or 1, respectively.

The letter a represents an integer greater than or equal to 0.

Further, Q is a divalent group expressed by any of Formulae (c-10) to (c-12) below.

[Formula 3]

$$-C(=O)-N(R^1)-R^3-N(R^1)-C(=O)- \qquad (c\text{-}10)$$

$$-(X)_p-CH_2CH_2R^4CH_2CH_2-(X)_p- \qquad (c\text{-}11)$$

$$-C(=O)-N\langle R^3, R^3 \rangle N-C(=O)- \qquad (c\text{-}12)$$

In Formulae (c-10) to (c-12), X, p, and $R^1$ are as defined in Formula (c-9).

$R^3$ is a substituted or unsubstituted divalent hydrocarbon group.

$R^4$ is a substituted or unsubstituted divalent hydrocarbon group in which one or two or more of an oxygen atom, a nitrogen atom, a silicon atom, and a sulfur atom may be interposed in the bond or a functional group expressed by Formula (c-13) or (c-14) below.

[Formula 4]

$$-Si(R^5)_2-R^6-Si(R^5)_2- \quad (c-13)$$

$$(c-14)$$

In Formulae (c-13) and (c-14), $R^5$ is a substituted or unsubstituted monovalent hydrocarbon group, and $R^6$ is a group including one or two or more of a carbon atom, an oxygen atom, a nitrogen atom, a silicon atom, and a sulfur atom in the main chain structure.

In one embodiment, in Formula (c-9), a = 0. In such a case, Formula (c-9) is expressed by Formula (c-15) below.

$$CH_2=CH-(X)_p-R^f-(X)_p-CH=CH_2 \quad (c-15)$$

In Formula (c-15), X, p, and $R^f$ are as defined in Formula (c-9).

The specific example of $R^f$ may be groups below.

$-C_mF_{2n}-$ (m, n: integer greater than or equal to 1)

$$-[CF(CF_3)OCF_2]_p-(CF_2)_r-[CF_2OCF(CF_3)]_q-$$

$$-CF_2CF_2-[OCF_2CF_2CF_2]_w-OCF_2CF_2-$$

The reactive compound may be a compound with siloxane backbone having an alkenyl group other than those listed above as examples. The compound with siloxane backbone having an alkenyl group in the molecule thereof may be, for example, a polymer of methylvinylsiloxane, a polymer of dimethylsiloxane, a copolymer of dimethylsiloxane and methylvinylsiloxane, and a copolymer of dimethylsiloxane, methylvinylsiloxane, and methylphenylsiloxane, or the like. Other than the above, organopolysiloxane containing an alkenyl group in the molecule thereof, which is a liquid silicone rubber produced by addition polymerization may be employed.

The reactive compound is available as a commercially available product and may be, for example, "SIFEL" (registered trademark) by Shin-Etsu Chemical or the like.

As described above, addition of the fluorine oligomer with perfluoro backbone and the alternatively usable reactive compound (hereafter, the fluorine oligomer with perfluoro backbone and the reactive compound may be collectively denoted as "compound C") can significantly improve the plasma resistance of the fluorine-containing elastomer in which the FKM and the FFKM are crosslinked to each other, and on the other hand, addition of a large amount of the compound C will reduce the hardness of the fluorine-containing elastomer. Further, since the compound C is a liquid lubricant oil having good fluidity, it is difficult to knead and mix a large amount of the compound C with the FKM and FFKM that are rubber components. Therefore, the lower limit of the the compound C component relative to 100 phr of the FKM component and the FFKM component that are rubber components may be, for example, 0.1 phr or greater, 0.2 phr or greater, 0.3 phr or greater, 0.4 phr or greater, 0.5 phr or greater, 0.6 phr or greater, 0.7 phr or greater, 0.8 phr or greater, 0.9 phr or greater, 1.0 phr or greater, 1.1 phr or greater, 1.2 phr or greater, 1.3 phr or greater, 1.4 phr or greater, 1.5 phr or greater, 1.6 phr or greater, 1.7 phr or greater, 1.8 phr or greater, 1.9 phr or greater, or 2.0 phr or greater. On the other hand, the upper limit of the compound C component may be, for example, 40 phr or less, 39 phr or less, 38 phr or less, 37 phr or less, 36 phr or less, 35 phr or less, 34 phr or less, 33 phr or less, 32 phr or less, 31 phr or less, 30 phr or less, 29 phr or less, 28 phr or less, 27 phr or less, 26 phr or less, 25 phr or less, 24 phr or less, 23 phr or less, 22 phr or less, 21 phr or less, or 20 phr

or less.

<Component (d)>

Next, the fluororesin that is the component (d) will be described. The fluororesin is added to intend to improve the plasma resistance and improve the hardness of the fluorine-containing elastomer. The fluororesin is not particularly limited as long as it improves the plasma resistance and improves the hardness. The fluororesin may be, but not limited to, for example, polytetrafluoroethylene (PTFE), perfluoroalkoxy fluororesin (PFA), tetrafluoroethylene-hexafluoropropylene copolymer (FEP), ethylene-tetrafluoroethylene copolymer (ETFE), ethylene-chlorotrifluoroethylene copolymer (ECTFE), poly-chlorotrifluoroethylene (PCTFE), chlorotrifluoroethylene (CTFE), poly-vinylidene fluoride (PVDF), poly-vinyl fluoride (PVF), or the like. The molecular weight of the fluororesin is not particularly limited as long as it is within a range that can obtain the advantageous effects disclosed in the present application. The lower limit value thereof may be, but not limited to, for example, 10,000 or greater, 50,000 or greater, 100,000 or greater, 200,000 or greater, 300,000 or greater, 400,000 or greater, 500,000 or greater, 600,000 or greater, 700,000 or greater, 800,000 or greater, 1,000,000 or greater, or the like. On the other hand, the upper limit value thereof may be 12,000,000 or less, 11,000,000 or less, 10,000,000 or less, 9,000,000 or less, 8,000,000 or less, 7,000,000 or less, 6,000,000 or less, 5,000,000 or less, or the like.

Note that, as illustrated in Examples and Comparative examples described later, when the fluororesin is dispersed in the FKM having lower plasma resistance than the FFKM, once the FKM is eroded and gasified by plasma irradiation, the fluororesin is more likely to be detached as particles from the fluorine-containing elastomer (seal material). It is preferable for the fluororesin to be present (dispersed) more in the FFKM, which has higher plasma resistance, of the two immiscible phases of the FKM and the FFKM. Examples of such a fluororesin may be, for example, polytetrafluoroethylene (PTFE), perfluoroalkoxy alkane (PFA), tetrafluoroethylene-hexafluoropropylene copolymer (FEP), poly-chlorotrifluoroethylene (PCTFE), ethylene-tetrafluoroethylene (ETFE), poly-vinylidene fluoride (PVDF), or the like. Among the fluororesins listed as examples, PTFE, PFA, or FEP, which have high affinity with the FFKM, are preferable.

Note that, for products such as a seal material with the fluorine-containing elastomer, although less occurrence of particles is preferable in use of the products under a plasma environment, occurrence of particles may be accepted for some required operating environments as long as the occurring particle amount is below the defined value. Therefore, although dispersion of more fluororesin in the FFKM is preferable, dispersion of some fluororesin in the FKM may also be accepted. In other words, it can be said that the amount of the fluororesin dispersed in the FFKM is larger than the amount of the fluororesin not dispersed in the FFKM (for example, dispersed in the FKM).

Although the fluororesin is not particularly limited in shape as long as it is dispersed more in the FFKM, the fluororesin is preferably in a particulate form, and may also be in a fibrous form.

The average particle diameter of the primary particles of the particulate fluororesin is not particularly limited as long as it is within a range that can improve the hardness of the fluorine-containing elastomer. The lower limit value of the average particle diameter may be, but not limited to, for example, 0.05 μm or greater, 0.06 μm or greater, 0.07 μm or greater, 0.08 μm or greater, 0.09 μm or greater, 0.1 μm or greater, 0.125 μm or greater, 0.15 μm or greater, 0.175 μm or greater, 0.2 μm or greater, 0.25 μm or greater, 0.3 μm or greater, 0.4 μm or greater, or 0.5 μm or greater. On the other hand, the upper limit value of the average particle diameter may be, for example, 50 μm or less, 47.5 μm or less, 45 μm or less, 42.5 μm or less, 40 μm or less, 37.5 μm or less, 35 μm or less, 32.5 μm or less, 30 μm or less, 27.5 μm or less, 25 μm or less, or the like.

Note that the average particle diameter can be measured by using a known method such as a laser diffraction and scattering method. Note that, as the fluororesin, commercially available products may be used. In the case of commercially available products, the particle diameter stated in a catalog or the like can be used as the average particle diameter.

As the commercially available fluororesin not containing hydrogen, the PTFE may be TLP 10F-1, MP-1300-J, Teflon (registered trademark) PTFE series by Chemours-Mitsui Fluoroproducts., Polyflon PTFE series by Daikin, or the like, PFA may be Neoflon PFA powder coating series by Daikin or the like, and FEP may be FEP powder coating series by Daikin or the like.

As the commercially available fluororesin containing hydrogen, the ETFE may be Fluon (registered trademark) LM-2150 by AGC, Neoflon ETFE EC-6520 by Daikin, or the like, and PVDF may be KYNAR (registered trademark) series PVDF by ARKEMA, KF polymer series by Kureha, or the like.

The fluororesin is added in order to increase the hardness of the fluorine-containing elastomer that is reduced by addition of the compound C. Therefore, the addition amount of the fluororesin can be adjusted as appropriate in accordance with the addition amount of the compound C and the value of required hardness. The lower limit value of the weight ratio of the fluororesin to the compound C (fluororesin / compound C) may be, but not limited to, for example, 0.1 or greater, 0.2 or greater, 0.3 or greater, 0.4 or greater, 0.5 or greater, 0.6 or greater, 0.7 or greater, 0.8 or greater, 0.9 or greater, or 1.0 or greater. On the other hand, an excessively high weight ratio of fluororesin / compound C may cause excessively high hardness. The upper limit value of the weight ratio can also be adjusted as appropriate taking required hardness or the like into consideration and may be, but not limited to, for example, 6 or less, 5.5 or less, 5.0 or less, 4.5 or

less, 4.0 or less, 3.5 or less, 3.0 or less, or the like.

As described above, it is preferable that most of the added fluororesin be dispersed in the FFKM. If the addition amount of the fluororesin relative to the FFKM is excessively large, the FFKM will no longer fully disperse (enclose) the added fluororesin, and the fluororesin may be dispersed (transferred) into the FKM. Therefore, the ratio of fluororesin occupying the rubber composition can be adjusted as appropriate in accordance with the ratio of the FFKM that is a rubber component. The upper limit value of the weight ratio of the fluororesin to the FFKM (fluororesin / FFKM) may be, but not limited to, 2 or less, 1.9 or less, 1.8 or less, 1.7 or less, 1.6 or less, 1.5 or less, 1.4 or less, 1.3 or less, 1.2 or less. 1.1 or less. 1.0 or less, or the like. On the other hand, the lower limit value of the weight ratio of fluororesin / FFKM may be, but not limited to, for example, 0.1 or greater, 0.2 or greater, 0.3 or greater, 0.4 or greater, 0.5 or greater, 0.6 or greater, or the like because the hardness does not increase when the addition amount of the fluororesin is smaller.

Note that, as a reinforcing filler for increasing the hardness of the fluorine-containing elastomer, carbon black, silica, and the like are known. In the rubber composition according to the embodiment, however, combined use of the FFKM and the fluororesin having high affinity with the FFKM as the filler can suppress occurrence of particles during plasma irradiation. That is, the rubber composition according to the embodiment achieves a significant synergistic effect, which is not achieved by the conventional fillers, that the use of the fluororesin having high affinity with the FFKM as the filler improves the plasma resistance and improves the hardness while suppressing occurrence of particles.

The hardness of the fluorine-containing elastomer obtained by crosslinking the rubber composition according to the embodiment can be adjusted as appropriate in accordance with the purpose of use of the fluorine-containing elastomer. For example, when the seal material fabricated from the fluorine-containing elastomer is used as seal materials for semiconductor devices, the required hardness is approximately 50 to 80. Further, when the seal material is used as seal materials for oil drilling rigs, the required hardness is approximately 70 to 90. The lower limit value of the hardness of the fluorine-containing elastomer may be, but not limited to, 50 or greater, 51 or greater, 52 or greater, 53 or greater, 54 or greater, 55 or greater, 56 or greater, 57 or greater, 58 or greater, 59 or greater, or 60 or greater. On the other hand, the upper limit value of the hardness of the fluorine-containing elastomer may be, but not limited to, 90 or less, 89 or less, 88 or less, 87 or less, 86 or less, 85 or less, 84 or less, 83 or less, 82 or less, 81 or less, 80 or less, or the like. The ratios of the FKM, the FFKM, the compound C, and the fluororesin contained in the rubber composition can be adjusted as appropriate to have the hardness described above.

<Optional and additional components that may be contained in the rubber composition>

Next, optional and additional components that may be contained in the rubber composition will be described.

(e) Crosslinking agent, co-crosslinking agent

The rubber composition can be crosslinked by organic peroxide. As the organic peroxide crosslinking agent, known crosslinking agents for crosslinking fluorine-based elastomers can be used, which may be, for example, dicumyl peroxide, di(tert-butylperoxy diisopropyl)benzene, 2,5-dimethyl-2,5-di(tert-butylperoxy)hexane, or the like.

As the co-crosslinking agent, known co-crosslinking agents for crosslinking fluorine-based elastomers can be used. The co-crosslinking agent may be, for example, triallyl isocyanurate, triallyl cyanurate, triallyl trimerylate, N,N'-m-phenylene dimaleimide, trimethylolpropane trimethacrylate, or the like. Other than the above, acrylate and methacrylate monomers or the like can also be used.

Further, as the co-crosslinking agent, a compound expressed by Formula (e-1) below, which is a compound disclosed in Patent Literature 1, and/or a compound expressed by Formula (e-2) below may be used.

[Formula 5]

$$(R^3R^2C=CR^1)_m-C_6(R^4)_{5-m}-A-C_6(R^4)_{5-n}-(CR^1=CR^2R^3)_n \qquad (e-1)$$

(In Formula (e-1), A is a single bond, -O-, -S-, a heteroatom-containing group, a straight-chain or branched alkylene group, a cycloalkylene group, or an arylene group, and in these groups, none of the hydrogen atoms is substituted with a fluorine atom or some or all of the hydrogen atoms are substituted with fluorine atoms. $R^1$, $R^2$, $R^3$, and $R^4$ are independently a hydrogen atom, a fluorine atom, an alkyl group, an alkylfluoride group, or a substituted or unsubstituted aryl group,

respectively. The multiple $R^1$ are the same or differ from each other. The multiple $R^2$ are the same or differ from each other. The multiple $R^3$ are the same or differ from each other. The multiple $R^4$ are the same or differ from each other. At least one of $R^1$, $R^2$, and $R^3$ is a fluorine atom or a group including a fluorine atom. The letter m represents an integer of 1 to 5. The letter n represents an integer of 1 to 5.)

[Formula 6]

$$[CH_2=CH-(CH_2)_m-(O)_n]_t-Z \qquad (e-2)$$

(In Formula (e-2), n and m are 0 or 1, respectively. The letter t represents an integer of 2 or greater. Z is a t-valent linking group.)

Note that detailed description of the compounds expressed by Formula (e-1) and Formula (e-2) listed above is provided in Patent Literature 1. Therefore, in the present specification, the description of Formula (e-1) and Formula (e-2) listed above is omitted. The content of Patent Literature 1 (International Publication No. 2021/230231) is incorporated in the present specification by reference.

The crosslinking agent and the co-crosslinking agent are contained at least when the rubber composition is crosslinked. Therefore, the crosslinking agent and the co-crosslinking agent are not necessarily required to be contained as essential components when the rubber composition is provided, and the crosslinking agent and the co-crosslinking agent can be added separately when the rubber composition is crosslinked. The rubber composition according to the embodiment itself may of course contain the crosslinking agent and the co-crosslinking agent. Further, the crosslinking agents described above may be used alone or used in combination of two or more thereof. Similarly, the co-crosslinking agents described above may be used alone or used in combination of two or more thereof.

(f) Other components

Optional and additional components other than those described above in (e) may be, for example, a filling material, a thickening agent, a pigment, a coupling agent, an antioxidant, a stabilizer, or the like. The filling material may be, for example, carbon black, silica, or the like.

[Embodiment of the fluorine-containing elastomer]

The fluorine-containing elastomer according to the embodiment can be fabricated by crosslinking the rubber composition of any embodiment disclosed in the present application. The conditions when the rubber composition is crosslinked (crosslinking conditions) are not particularly limited, and the rubber composition may be heated at 100 to 250 °C for 10 minutes to 5 hours, for example. Typically, for the primary crosslinking, the raw material (the rubber composition) is put in a mold and crosslinked while being press-molded. The primary crosslinking is performed by heating at 150 to 200 °C for 5 to 60 minutes, for example. The molded is then taken out of the mold and subjected to secondary crosslinking in the air or an inert gas atmosphere. The secondary crosslinking is performed by heating at 150 to 300 °C for 1 to 100 hours, for example. The crosslinking can be performed by using an electric furnace or the like. By providing a thermal history in the secondary crosslinking, it is possible to prevent deformation or the like during use. Radiation treatment is not necessarily required in the crosslinking, and it is preferable to omit the radiation treatment.

[Embodiment of the seal material]

The seal material according to the embodiment contains the fluorine-containing elastomer according to any embodiment disclosed in the present application. The form of the seal material is not particularly limited and may be, for example, a molded body such as a gasket or a seal ring. The application of the seal material is not particularly limited. While being widely applicable to various devices, the seal material disclosed in the present application can have excellent plasma resistance and relatively high hardness and is therefore preferable as seal materials for semiconductor manufacturing device, for example. The semiconductor manufacturing devices may be, for example, plasma devices, etching devices, plasma CVD devices, or the like.

Although Examples will be presented below to specifically describe the embodiment disclosed in the present application, these Examples are merely provided for illustration of the embodiment. These Examples are intended neither to limit the scope of the invention disclosed in the present application nor to express restriction of the same.

[EXAMPLES]

<Material>

Components used for Examples and Comparative examples are as follows.

(a) FKM: DAI-EL G-912 by DAIKIN INDUSTRIES, LTD.
(b) FFKM: AFLAS (registered trademark) FFKM PM3000, by AGC Inc.
(c) Compound C (PFPE): Krytox VPF16256 by DuPont de Nemours, Inc.
(d) Fluororesin:

PFA: Neoflon ACX-34 by DAIKIN INDUSTRIES, LTD.
PTFE: TLP-10-1 (average particle diameter: 0.2 μm) by DU PONT-MITSUI FLUOROCHEMICALS COMPANY, LTD
MP-1300-J (average particle diameter: 11 μm) by DU PONT-MITSUI FLUOROCHEMICALS COMPANY, LTD

- Crosslinking agent: 2,5-dimethyl-2,5-di(t-butylperoxy)hexane, PERHEXA 25B by NOF CORPORATION
- Co-crosslinking agent: triallyl isocyanurate (TAIC) by Mitsubishi Chemical Corporation

[Examples 1 to 6, Comparative examples 1 to 4]

Each rubber composition having a composition (weight ratio) listed in Table 1 was kneaded by an open roll, then put in a mold, thermally treated in the atmosphere at a temperature of 160 °C for 10 minutes (15 minutes for Comparative examples 1 and 3), and primary-crosslinked while being press-molded. Next, the molded was taken out of the mold and secondary-crosslinked in the air at 200 °C for 4 hours. In such a way, the molded body of the fluorine-containing elastomer was obtained. The shape of the molded body was an O-ring (AS568-214; inner diameter: 24.99 mm, thickness: 3.53 mm).
The obtained fluorine-containing elastomers were evaluated below.

(1) Hardness

The molded body (O-ring) was set to a micro rubber durometer (model name: HPE II shore AM/M) by BAREISS, and the hardness was measured.

(2) Thermal resistance

A fastening member clamped by bolts was prepared so as to compress the obtained O-ring by 25% by using two flat plates with a spacer, and the fastening member was thermally exposed in a gear oven under predetermined conditions (in the atmosphere environment, at 150 °C for 72 hours). The fastening member was then taken out of the gear oven, and the O-ring was released while the fastening member was still hot, and the released O-ring was allowed to cool for 30 minutes to ordinary temperature. The thicknesses of the O-ring before and after the test were measured in accordance with JIS K 6262, and the compression set was calculated by the following equation (unit: %). This compression set (CS) was defined as thermal resistance.

Compression set = (thickness before test - thickness after test) / (thickness before test - spacer thickness) x 100

(3) Tensile property

A table-top precision universal testing machine (Shimadzu Corporation, Model name: Autograph AGS-500NX) was used to measure the tensile strength [MPa], the elongation at break [%], and M100 [MPa] of the molded body (O-ring) under conditions of the room temperature of 25±2 °C and the tensile rate of 300 mm/min.

(4) Plasma resistance

(4-1) Weight reduction rate [%]

The molded body (O-ring) was exposed with plasma under the following conditions, and the weight reduction rate of the molded body based on the weights before and after the exposure was calculated.

- Device: surface wave plasma etching device by Shinko Seiki
- Gas: $O_2$ (2000 sccm) + $CF_4$ (40 sccm)
- Treatment pressure: 133 Pa
- Output power: 3 kW
- Exposure time: 2 hours (Examples 1 to 6, Comparative examples 1 to 4), 5 hours (Comparative example 4 and Example 1)

Weight reduction rate [%] = [(weight before plasma exposure - weight after plasma exposure) / (weight before plasma exposure)] x 100

(4-2) Particle

Whether or not particles occur due to the plasma exposure described above was visually observed. Further, for some of the Examples and Comparative examples, photographs of the molded body before and after subjected to plasma irradiation were taken, and photographs was taken after the samples subjected to the plasma irradiation were crimped onto black tapes.

The results are listed in Table 1. Further, FIG. 1 represents the molded body (O-ring) of Comparative examples 1 to 3, the lane A includes photographs taken before plasma irradiation, the lane B includes photographs taken after two hours of plasma irradiation, and the lane C includes photographs where the molded bodies after subjected to two hours of plasma irradiation were transferred onto black tapes. FIG. 2 represents the molded body (O-ring) of Comparative example 4 and Example 1, the lane A includes photographs taken before plasma irradiation, and the lane B includes photographs taken after five hours of plasma irradiation.

Further, FIG. 3 illustrates an image of the cross section of the molded body of Example 4 mapped for elastic modulus by using a scanning probe microscope (SPM)

(Dimension Icon by Bruker).

[Table 1]

| Example(Ex.) · Comparative Example(Comp. Ex.) | | | Comp. Ex. 1 | Comp. Ex.2 | Comp. Ex. 3 | Comp. Ex. 4 | Ex. 1 | Ex. 2 | Ex. 3 | Ex. 4 | Ex. 5 | Ex. 6 | Ex. 7 |
|---|---|---|---|---|---|---|---|---|---|---|---|---|---|
| weight ratio (phr) | (**a**)**FKM** | G912 | 100 | 77 | 100 | 77 | 77 | 77 | 77 | 77 | 77 | 94 | 54 |
| | (**b**)**FFKM** | 40Z | | 23 | | 23 | 23 | 23 | 23 | 23 | 23 | 6 | 46 |
| | (**c**)**PFPE** | Krytox16256 | | | 11 | 11 | 11 | 11 | 11 | 11 | 11 | 5 | 11 |
| | crosslinking agent | 25B | 0.8 | 0.8 | 0.8 | 0.8 | 0.8 | 0.8 | 0.8 | 0.8 | 0.8 | 0.8 | 0.8 |
| | co-crosslinking agent | TAIC | 1.4 | 1.4 | 1.4 | 1.4 | 1.4 | 1.4 | 1.4 | 1.4 | 1.4 | 1.4 | 1.4 |
| | (d)fluororesin | PFA | | | | 0 | 5 | 9 | 19 | | | 5 | 19 |
| | | PTFE | 19 | 19 | 19 | | | | | 19 | 19 | | |
| | | particle diameter ($\mu$m) | 0.2 | 0.2 | 0.2 | - | 25 | 25 | 25 | 0.2 | 11 | 25 | 25 |
| properties | hardness | hardness after secondary crosslinking | **60** | **69** | **55** | **51** | **54** | **56** | **65** | **64** | **64** | **57** | **64** |
| | thermal resistance (CS) | 150°C × 72hr (hot) | **47** | **27** | **41** | **20** | **17** | **20** | **23** | **25** | **25** | **13** | **33** |
| | tensile property (O-ring tensile test) | tensile strength [MPa] | | | | **3.2** | **4.0** | **5.4** | **7.3** | **6.6** | **7.1** | **6.3** | **6.7** |
| | | elongation at break [%] | | | | **256.1** | **274.9** | **286.5** | **240.6** | **297.6** | **302.1** | **276.4** | **280.0** |
| | | M100 [MPa] | | | | **0.8** | **1.0** | **1.3** | **4.0** | **1.9** | **1.9** | **1.5** | **1.8** |
| | plasma resistance | weight reduction rate[wt%],120min O2+CF4= 2000/40, 133Pa,3000W | **12.83** | **2.03** | **5.20** | **0.45** | **0.43** | **0.38** | **0.38** | **0.28** | **0.28** | **1.97** | **0.26** |
| | | particle occurrence | yes | yes | yes | no | no | no | no | no | no | no | no |

From the results illustrated in Table 1 and FIG. 1 and FIG. 2, it has been confirmed that the rubber composition, the fluorine-containing elastomer, and the seal material disclosed in the present application achieve the advantageous effects (or have technical features) below.

(1) The plasma resistance of the molded bodies of Comparative examples 1 to 3, which lack any of the three components of the FKM, the FFKM, and the compound C, was significantly lower than the plasma resistance of the molded body of Comparative example 4, which contains the three components of the FKM, the FFKM, and the compound C. Therefore, it has been confirmed that it is important to contain the three components of the FKM, the FFKM, and the compound C in order to improve the plasma resistance. On the other hand, as indicated for Comparative examples 3 and 4, it has been confirmed that addition of the compound C reduces the hardness of molded bodies. From the comparison between Comparative example 4 and Examples 1 to 6, however, it has been confirmed that further addition of the fluororesin in addition to the FKM, the FFKM, and the compound C increases the hardness of molded bodies and improve the plasma resistance. It has been confirmed from the above results that it is important to mix the four components of the FKM, the FFKM, the compound C, and the fluororesin in order to form a molded body having excellent plasma resistance and high hardness.

(2) Since the seal material of Comparative example 1 contains neither the FFKM nor the compound C, the fluororesin is dispersed in the FKM. The FKM has lower plasma resistance than the FFKM and the compound C. Thus, as illustrated in Table 1 and FIG. 1, once the FKM was eroded by plasma irradiation, particles of the fluororesin were exposed on the surface of the molded body to the extent that these particles were sufficiently visible. In contrast, in the Examples, no particle of the fluororesin occurred. Accordingly, an SPM image of Example 4 was taken. Since a higher elastic modulus provides a brighter area in SPM images, the fluororesin appears white, the FKM appears gray, and the FFKM appears black in the SPM image illustrated in FIG. 3. As illustrated in FIG. 3, it was observed that most of the fluororesin (white mass) is dispersed in the FFKM in black. Therefore, it has been confirmed that, once the fluororesin is dispersed in the FFKM, the fluororesin is less likely to occur as particles even when the FKM is eroded by plasma irradiation.

(3) From the results of Comparative example 4 and Examples 1 to 3, it has been confirmed that a higher addition ratio of the fluororesin to the rubber composition provides higher hardness of molded bodies and also improves the plasma resistance thereof.

(4) From the results of Examples 3 to 5, it has been confirmed that the particle diameter of the fluororesin does not significantly affect the hardness and the plasma resistance of the seal material.

(5) From the results of Comparative example 4 and Examples 1 to 7, it has been confirmed that mixing the four components of the FKM, the FFKM, the compound C, and the fluororesin enables easy adjustment of the balance between the hardness, the thermal resistance, the tensile property, and the plasma resistance.

[Industrial Applicability]

The rubber composition, the fluorine-containing elastomer, and the seal material disclosed in the present application can increase the hardness while improving the plasma resistance. Therefore, the rubber composition, the fluorine-containing elastomer, and the seal material disclosed in the present application are useful for the seal material industry and the like that require plasma resistance and predetermined hardness and for the semiconductor industry for plasma treatment devices, semiconductor manufacturing devices, and the like using the disclosed seal material.

## Claims

**1.** A rubber composition comprising components of:

(a) a crosslinkable fluororubber;
(b) a crosslinkable perfluororubber;
(c) a fluorine oligomer with perfluoro backbone; and
(d) a fluororesin.

**2.** The rubber composition according to claim 1, wherein the component (c) is contained at 0.1 phr or greater and 40 phr or less relative to 100 phr of the component (a) and the component (b) that are rubber components.

**3.** The rubber composition according to claim 1, wherein a weight ratio of the component (d) / the component (c) is 0.1 or greater.

4. The rubber composition according to claim 2, wherein a weight ratio of the component (d) / the component (c) is 0.1 or greater.

5. The rubber composition according to claim 1, wherein a weight ratio of the component (d) / the component (b) is 0.1 or greater and 2 or less.

6. The rubber composition according to claim 2, wherein a weight ratio of the component (d) / the component (b) is 0.1 or greater and 2 or less.

7. The rubber composition according to claim 3, wherein a weight ratio of the component (d) / the component (b) is 0.1 or greater and 2 or less.

8. The rubber composition according to claim 4, wherein a weight ratio of the component (d) / the component (b) is 0.1 or greater and 2 or less.

9. A fluorine-containing elastomer made by crosslinking the rubber composition according to any one of claims 1 to 8.

10. The fluorine-containing elastomer according to claim 9, wherein

the component (a) and the component (b) are immiscible with each other and have a phase-separated structure,
the component (d) is dispersed in the component (b), and
the amount of the component (d) dispersed in the component (b) is greater than the amount of the component (d) not dispersed in the component (b).

11. A seal material containing the fluorine-containing elastomer according to claim 9.

12. The fluorine-containing elastomer according to claim 10, wherein a weight reduction rate after subjected to plasma exposure is 2% or less, the plasma exposure being performed by using a surface wave plasma etching device under conditions of a gas flow rate of $O_2$ (2000 sccm) + $CF_4$ (40 sscm), a treatment pressure of 133 Pa, output power of 3 kW, and an exposure time of 2 hours.

Comparative Example 1
Comparative Example 2
Comparative Example 3
A
B
C

FIG.1

Comparative Example 4
Example 1
A
B

FIG.2

FIG.3

## INTERNATIONAL SEARCH REPORT

International application No. **PCT/JP2024/039413**

**A. CLASSIFICATION OF SUBJECT MATTER**

***C08L 27/12***(2006.01)i; ***C08L 71/00***(2006.01)i; ***C08L 101/04***(2006.01)i; ***C09K 3/10***(2006.01)i
FI: C08L27/12; C08L71/00 Z; C08L101/04; C09K3/10 M

According to International Patent Classification (IPC) or to both national classification and IPC

**B. FIELDS SEARCHED**

Minimum documentation searched (classification system followed by classification symbols)

C08L27/12; C08L71/00; C08L101/04; C09K3/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/094710 A1 (NICHIAS CORPORATION) 08 June 2017 (2017-06-08) claims, paragraphs [0006]-[0008], examples | 1-12 |
| A | WO 2015/098338 A1 (NIPPON VALQUA INDUSTRIES, LTD.) 02 July 2015 (2015-07-02) claims, examples | 1-12 |
| A | JP 2015-124346 A (NIPPON VALQUA INDUSTRIES, LTD.) 06 July 2015 (2015-07-06) claims, examples | 1-12 |
| A | JP 2005-233339 A (NIPPON VALQUA INDUSTRIES, LTD.) 02 September 2005 (2005-09-02) claims, examples | 1-12 |
| A | JP 2003-026811 A (KABUSHIKI KAISHA MORISEI KAKO) 29 January 2003 (2003-01-29) claims, examples | 1-12 |
| A | JP 2017-179210 A (NICHIAS CORPORATION) 05 October 2017 (2017-10-05) claims, examples | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 December 2024** | **21 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No. **PCT/JP2024/039413**

**C. DOCUMENTS CONSIDERED TO BE RELEVANT**

| Category* | Citation of document, with indication, where appropriate, of the relevant passages | Relevant to claim No. |
|---|---|---|
| A | WO 2020/235565 A1 (DAIKIN INDUSTRIES, LTD.) 26 November 2020 (2020-11-26) claims, examples | 1-12 |
| A | WO 2023/195485 A1 (DAIKIN INDUSTRIES, LTD.) 12 October 2023 (2023-10-12) claims, examples | 1-12 |

Form PCT/ISA/210 (second sheet) (July 2022)

**INTERNATIONAL SEARCH REPORT**
**Information on patent family members**

International application No.
**PCT/JP2024/039413**

| Patent document cited in search report | Publication date (day/month/year) | Patent family member(s) | Publication date (day/month/year) |
|---|---|---|---|
| WO 2017/094710 A1 | 08 June 2017 | US 2018/0346703 A1<br>claims, paragraphs [0008]-[0010], examples<br>JP 2019-163465 A<br>EP 3385325 A1<br>KR 10-2018-0077234 A<br>CN 108368317 A | |
| WO 2015/098338 A1 | 02 July 2015 | US 2017/0002153 A1<br>claims, examples<br>EP 3088461 A1<br>KR 10-2016-0105778 A<br>CN 105849180 A | |
| JP 2015-124346 A | 06 July 2015 | US 2016/0319102 A1<br>claims, examples<br>WO 2015/098337 A1<br>EP 3088460 A1<br>KR 10-2016-0104620 A<br>CN 105899600 A | |
| JP 2005-233339 A | 02 September 2005 | (Family: none) | |
| JP 2003-026811 A | 29 January 2003 | (Family: none) | |
| JP 2017-179210 A | 05 October 2017 | (Family: none) | |
| WO 2020/235565 A1 | 26 November 2020 | US 2022/0243047 A1<br>claims, examples<br>EP 3974473 A1<br>CN 113825795 A<br>KR 10-2022-0005018 A | |
| WO 2023/195485 A1 | 12 October 2023 | JP 2023-154219 A<br>JP 2023-154427 A<br>TW 202346434 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021230231 A
- JP 2006009010 A
- JP 2003183402 A
- JP H11116684 A
- JP H11116685 A